# EUROPÄISCHE PATENTSCHRIFT

(11) **EP 2 932 055 B1**
(45) Veröffentlichungstag und Bekanntmachung des Hinweises auf die Patenterteilung: **26.04.2017**
(21) Anmeldenummer: 13814072.8
(22) Anmeldetag: 13.12.2013
(51) Int. Cl.: F01K 25/10, F02C 1/10

(54) **WÄRMEKRAFTMASCHINE**
HEAT ENGINE
MOTEUR THERMIQUE

(30) Priorität: 14.12.2012 DE 102012112276
(43) Veröffentlichungstag der Anmeldung: 21.10.2015
(73) Patentinhaber: Kintea, Renate, 68161 Mannheim (DE)
(72) Erfinder: WÜBBELING, Martin, 68161 Mannheim (DE)
(74) Vertreter: Mierswa, Klaus
(86) Internationale Anmeldenummer: PCT/EP2013/076517
(87) Internationale Veröffentlichungsnummer: WO 2014/090984

(56) Entgegenhaltungen:
- WO-A1-2012/028149
- US-A- 3 375 664

## Beschreibung

Die Erfindung betrifft eine Wärmekraftmaschine mit den Merkmalen des Oberbegriffs des Anspruchs 1.

Aus der WO 2012 028 149 A1 ist eine Wärmekraftmaschine bekannt, die als Arbeitsmedium ein flüssiges Fluid, wie bspw. Kohlendioxid oder Kühlmittel, wie R134A oder R245A verwendet. Als grundlegendes Prinzip der Wärmekraftmaschine wird dabei die Temperaturausdehnung des jeweiligen flüssigen Fluides angewendet, um aus Wärmeenergie mittels der Beschleunigung des Gases mechanisch nutzbare Arbeit zu gewinnen. Dabei weist die Wärmekraftmaschine einen Erhitzer auf, der das jeweilige flüssige Fluid erhitzt und expandiert, sodass das erhitzte und ausgedehnte flüssige Fluid eine Steigleitung hinaufsteigen kann und eine nach dem Erhitzer angeordnete Strömungskraftmaschine antreiben kann. In dem Leitungskreislauf der Wärmekraftmaschine nachfolgend ist ein Kühler angeordnet, der das flüssige Fluid abkühlt, sodass es eine dem Kühler nachgeordnete Sinkleitung, die in den Erhitzer führt, hinunter strömen kann und es dem Erhitzer wieder zugeführt wird. Um zu verhindern, dass das flüssige Fluid in den dampfförmigen Zustand übergeht, ist in dem Kreislauf eine Druckregulierung installiert, die ein Verdampfen des flüssigen Fluides verhindert.

In der WO 2011 040 828 A1 ist eine Wärmekraftmaschine beschrieben, die zumindest zwei senkrecht stehende Räume aufweist. In einem der Räume wird bspw. durch Elektrizität die Luft erhitzt, sodass sie den Raum hinaufsteigt, während sie in dem anderen Raum abgekühlt wird und diesen hinunter strömt. Beide Räume sind sowohl oben als auch unten fluidisch leitend miteinander verbunden. An der Kopfseite des Raumes, der die Luft erhitzt, ist eine Strömungskraftmaschine angebracht, die von der aufsteigenden Luft in Bewegung versetzt wird und somit thermische Energie in mechanisch nutzbare Arbeit wandelt.

Aus US 3,375,664 A ist eine Wärmekraftmaschine mit einem als Erhitzer ausgebildeten ersten Wärmetauscher und einem als Kühler ausgebildeten zweiten Wärmetauscher bekannt, wobei zwischen dem ersten und dem zweiten Wärmetauscher eine Turbine angeordnet ist. Die Wärmekraftmaschine umfasst ebenfalls ein Fluid aufweisendes und als Kreislauf ausgebildetes Leitungssystem, das die beiden Wärmetauscher fluidisch leitend miteinander verbindet.

Die in der DE 27 46 731 beschriebene Wärmekraftmaschine überführt mittels Sonnenkollektoren eine Flüssigkeit in den dampfförmigen Zustand, der in einen mit Flüssigkeit gefüllten Behälter geleitet wird, in dem eine Schaufelturbine gelagert ist, wobei durch den einströmenden Dampf die Turbine angetrieben wird. Der Dampf wird zumindest teilweise mittels eines Kondensators kondensiert und in die Sonnenkollektoren zurückgeführt, sodass diese die Flüssigkeit wiederum verdampfen können.

Wärmekraftmaschinen, die auf der Verdampfung von Flüssigkeiten beruhen, zeichnen sich dadurch aus, dass sie konstruktiv aufwendig ausgebildet sind und meist für den Einsatz höherer Temperaturunterschiede geeignet sind. So gibt es zwar auch, bspw. auf dem Organic Rankine Cycle basierende, Anwendungen für den Tieftemperaturbereich, die zudem für geringere Temperaturunterschiede geeignet sind, jedoch ist auch bei dieser Ausführungsform ein Kondensator als Wärmesenke vorzusehen, damit das in dem gas- bzw. dampfförmigen Zustand überführte Fluid wieder in den flüssigen Aggregatzustand zurückgeführt werden kann. Zudem sind aufgrund des zumeist geschlossenen Kreislaufs, insbesondere bei dementsprechenden Arbeitsmitteln, erhöhte Anforderungen an die Dichtigkeit des Kreislaufs zu stellen, sodass auch dadurch eine derartige Wärmekraftmaschine konstruktiv aufwendig und kostenintensiv herzustellen ist.

Flüssigkeitsbasierte Wärmekraftmaschinen, die auf der thermischen Ausdehnung des flüssigen Arbeitsmedien basieren, sind zwar konstruktiv einfacher darzustellen, jedoch ist insbesondere bei geschlossenen Kreisläufen und/oder bei Verwendung von organischen Arbeitsmedien, wie bspw. R134A, ebenfalls eine erhöhte Anforderung an die Dichtigkeit des Kreislaufs zu stellen. Zudem muss in diesem Fall eine Druckregulierung vorgesehen werden, die ein Übertreten des Arbeitsfluids in den gasförmigen Zustand verhindert, da in diesem System kein Kondensator vorgesehen ist und der Übertritt des Arbeitsfluids in den gasförmigen Zustand den Prozess nahezu unbeherrschbar werden lässt.

Wärmekraftmaschinen, die auf der thermischen Ausdehnung von Gasen beruhen, weisen im Vergleich zu den flüssigkeitsbasierten Ausführungsformen eine deutlich höhere Wärmeausdehnung des Arbeitsmittels auf und können bei sehr geringen Temperaturgefällen eingesetzt werden. So besteht derzeit ein wachsender Bedarf an gasgeführten Wärmekraftmaschinen, die auf dem Temperaturausdehnungsprinzip beruhen und damit eine Beschleunigung des Gases bei gleichem Druck bewirken, und die kostengünstig, konstruktiv einfach sind und bei geringer Wartung eine hohe Betriebssicherheit aufweisen. Zu dem ist es wünschenswert, dass die Anlage einfach zu bedienen ist, und sich durch einen breiten Einsatzbereich auszeichnet.

Die vorliegende Erfindung beschäftigt sich mit dem Problem, für eine Wärmekraftmaschine eine neue und verbesserte oder zumindest eine alternative Ausführungsform anzugeben, die sich insbesondere durch konstruktive Einfachheit, hohe Betriebssicherheit und einen großen Einsatzbereich auszeichnet.

[A 01] In einem Aspekt der Erfindung wird eine Wärmekraftmaschine mit einem als Erhitzer ausgebildeten ersten Wärmetauscher, mit einem als Kühler ausgebildeten zweiten Wärmetauscher, mit einer, zwischen dem ersten Wärmetauscher und dem zweiten Wärmetauscher, angeordneten Turbine und einem, ein gasförmiges Arbeitsmedium aufweisenden und als Kreislauf ausgebildeten, Leitungssystem, das die Komponenten fluidisch leitend miteinander verbindet, vorgeschlagen, bei dem das Arbeitsmedium gasförmig ist und in Einbaulage vorzugsweise vertikal abfolgend der erste Wärmetauscher, die Turbine und der zweite Wärmetauscher angeordnet sind, wobei die Wärmetauscher (120,140, 200) isobare Wärmeaustauscher sind, so dass die Energiezufuhr sowie die Energieabfuhr isobar verläuft.

[A 02] Vorteilhaft können bei einer derartigen Ausführungsform bewährte Komponenten, wie bspw. die Wärmetauscher oder die Turbine eingesetzt werden, die zum einen konstruktiv beherrscht werden in beliebiger Stückzahl und Qualität auf dem Markt bereit gestellt werden können und die sich zum anderen durch hohe Wartungsfreiheit und konstruktive Einfachheit auszeichnen. Mit derartigen Komponenten ist eine kompakte Bauweise möglich, wodurch der Aufbau und Zusammenbau einer derartigen Wärmekraftmaschine vereinfacht ist. Zudem lässt sich eine derartige Wärmekraftmaschine zum einen im Niedertemperaturbereich bei bspw. Temperaturen unter 90°C einsetzen und sie ist zum anderen geeignet, geringe Temperaturdifferenzen in mechanisch oder elektrisch nutzbare Arbeit umzusetzen. Es ist auch denkbar, dass die Wärmekraftmaschine für einen Niedertemperaturbereich unter 80°C, insbesondere unter 70°C, ggf. unter 60°C und beispielsweise unter 50°C konzipiert ist. Diese niedrige Temperatur ermöglicht den Einsatz von Kunststoffen, die bei entsprechenden Füllmaterialien hohe mechanische Festigkeit und geringe Wärmeverluste aufweist. Zudem ist eine derartige Wärmekraftmaschine hinsichtlich ihre Größe und Leistung nahezu beliebig skalierbar und dies kostengünstig und ohne weiteren konstruktiven Aufwand.

In dem als Erhitzer ausgebildeten ersten Wärmetauscher wird dabei das gasförmige Arbeitsmedium erhitzt, wodurch es aufgrund seiner Wärmeausdehnung expandiert und beschleunigt wird. Diese kinetische Energie des Gases wird von der Turbine zumindest teilweise in mechanisch bzw. elektrisch nutzbare Energie umgewandelt, während der nachgeschaltete als Kühler ausgebildete zweite Wärmetauscher das gasförmige Arbeitsmedium wieder auf den Zustand, insbesondere hinsichtlich der Temperatur, zurückführt, der in Strömungsrichtung des gasförmigen Arbeitsmediums vor den ersten Wärmeaustauscher vorlag. Somit herrscht im Wesentlichen im gesamten Kreislauf ein gleicher Druck, sodass der Gesamtprozess isobar durchgeführt wird und lediglich die kinetische Energie bzw. der dynamische Druck des gasförmigen Arbeitsmediums zumindest teilweise in mechanisch bzw. elektrisch nutzbare Energie umgewandelt wird.

Unter Wärmetauscher sind Bauteile oder Baugruppen zu verstehen, die von einem weiteren Arbeitsmedium durchströmt werden, wobei zwischen dem weiteren Arbeitsmedium und dem gasförmigen Arbeitsmedium des Kreislaufes ein Wärmeübergang stattfindet Das als Kreislauf ausgebildete Leitungssystem ist im Wesentlichen eine beliebige Anordnung und Abfolge von hohlen Bauteilen, die fluidisch derartig miteinander verbunden sind, dass das gasförmige Arbeitsmedium ohne wesentliche Reibungsverluste dieselben durchströmen kann.

Unter Einbaulage ist diejenige Anordnung der Wärmekraftmaschine zu verstehen, in der sie betrieben werden kann. Dies ist eine Aufstellung vorzugsweise in vertikaler Richtung. Dabei ist unter einer vertikalen Richtung eine senkrechte Richtung bzw. eine derartige Richtung zu verstehen, die im Wesentlichen parallel und entgegengesetzt zur Gravitationswirkung orientiert ist. Aufgrund einer derartigen vertikalen Abfolge des ersten Wärmetauschers, der Turbine und des zweiten Wärmetauschers entgegen der Gravitationswirkung, nützt die Wärmekraftmaschine zudem auch einen Kamineffekt aus. Dabei wird das in dem ersten Wärmetauscher erhitzte, gasförmige Arbeitsmedium aufgrund seines Auftriebes nach oben getrieben, während das abgekühlte, gasförmige Arbeitsmedium an der Spitze der Wärmekraftmaschine und nach dem letzten als Kühler ausgebildeten Wärmetauscher im Leitungssystem nach unten absinken will. Dieser Kamineffekt unterstützt zusätzlich die Zirkulation des gasförmigen Arbeitsmediums während des Betriebes. Dadurch ergibt sich eine besonders kompakte Bauweise, die aber auch lageunabhängig z.B. horizontal eingesetzt werden kann.

Vorteilhaft ist dabei das dem letzten als Kühler ausgebildeten Wärmetauscher nachfolgende Leitungssystem abfallend, insbesondere senkrecht, ausgebildet, damit das abgekühlte, gasförmige Arbeitsmedium ohne nennenswerte Reibung der Schwerkraft folgend nach unten strömen kann und somit den Kamineffekt unterstützen kann.

[A 02] Sind der erste Wärmeaustauscher, der zweite Wärmeaustauscher und die Turbine als integrale Baueinheit ausgebildet, so können die Strömungsverhältnisse in einer derartigen integralen Baueinheit optimiert und fixiert werden, sodass weder, beim Aufbau noch beim Umsetzen einer derartigen Anlage ungünstige Strömungsverhältnisse mit hohen Reibungswiderständen in der Wärmekraftmaschine auftreten können. Somit ist aufgrund der integralen Bauweise eine hohe Betriebssicherheit und Betriebseffizienz sichergestellt. Zudem ist aufgrund der kompakten Baueinheit, ein Aufbau einer derartigen Anlage vereinfacht und kann demzufolge auch von Laien durchgeführt werden. Dabei kann insbesondere auf Verrohrung zwischen den einzelnen Komponenten der integralen Baueinheit verzichtet werden, so dass die Komponenten direkt fluidisch leitend miteinander verbunden sind.

Weist die Turbine zudem einen Generator auf, mit dem sie als integrale Baueinheit ausgebildet ist, so kann vorteilhaft die Wärmekraftmaschine zur Erzeugung von elektrischer Energie verwendet werden, ohne dass ein zusätzlicher Generator an die Wärmekraftmaschine bzw. deren Turbine angeschlossen werden muss. Aufgrund dieser integrierten Bauweise ist wiederum die Betriebssicherheit erhöht, und die Installation einer derartigen Wärmekraftmaschine zudem vereinfacht. Etwaige Verluste zwischen Turbine und Generator können durch eine derartige integrale Bauweise minimiert werden, sodass die Komponenten optimal aufeinander abgestimmt sind.

[A 03] Ist die Turbine als Radialturbine ausgebildet, so kann mittels dieser ohne aufwendige Änderungen der Schaufelgeometrie ein weiter Arbeitsbereich durch Drehzahländerungen überstrichen werden. Dies ermöglicht auch bei nur geringen Strömungen eine effiziente Ausbeute an elektrisch bzw. mechanisch nutzbarer Energie durch die Turbine, da mittels der Drehzahl unter anderem die Strömungsgeschwindigkeit des gasförmigen Arbeitsmediums angepasst werden kann.

[A 04] Vorteilhaft kann in dem Leitungssystem zwischen dem zweiten Wärmetauscher und dem ersten Wärmetauscher ein Gebläse oder ein Diffusor angeordnet sein. Mittels des Gebläses bzw. des Diffusors kann die Wärmekraftmaschine bspw. aus dem Stillstand heraus angefahren werden, oder das Gebläse kann auch unterstützend die Luftzirkulation in der gewünschten Strömungsrichtung in dem Leitungssystem bzw. den weiteren Komponenten der Wärmekraftmaschine aufrecht erhalten. Dabei kann zumindest teilweise die über das Gebläse in das gasförmige Arbeitsmedium applizierte mechanische Energie über die Turbine rückgewonnen werden.

[A 05] Des Weiteren kann ein, insbesondere als Kühler ausgebildeter, dritter regelbarer Wärmetauscher in dem Leitungssystem vorgesehen sein, der in Einbaulage vertikal abfolgend nach dem zweiten Wärmetauscher angeordnet ist Vorteilhaft kann durch einen derartigen regelbaren Wärmetauscher ein genau definierter Zustand des gasförmigen Arbeitsmediums nach dem dritten regelbaren Wärmetauscher eingestellt werden. Ist demzufolge der zweite Wärmetauscher nicht vollständig in der Lage, diesen gewünschten Zustand in dem gasförmigen Arbeitsmedium einzustellen, kann durch den dritten regelbaren Wärmetauscher dieser Zustand punktgenau erreicht werden. Dabei ist es auch denkbar, dass der dritte Wärmetauscher nicht als Kühler, sondern als Kühler und Erhitzer ausgebildet ist, sodass auch eine Unterkühlung der Luft durch den dritten regelbaren Wärmetauscher aufgefangen werden kann. Ein derartig regelbarer Wärmetauscher erhöht demzufolge die Prozesssicherheit und stellt in der Wärmekraftmaschine zumindest an einem Punkt einen definierten und gewünschten Zustand ein.

Dabei ist es auch denkbar, dass bei Temperaturschwankungen im ersten Wärmetauscher der dritte Wärmetauscher auf ein konstantes Temperaturgefälle einregelt. Sinkt demzufolge die Temperatur im ersten Wärmetauscher ab, so kann durch den dritten Wärmetauscher eine Endtemperatur eingestellt werden, die die Temperaturdifferenz zwischen einem warmen Bereich des gasförmigen Arbeitsmediums vor dem Einströmen in die Turbine und einem kalten Bereich des gasförmigen Arbeitsmediums vor dem ersten Wärmetauscher und/oder nach dem letzten als Kühler ausgebildeten Wärmetauscher konstant hält. Steigt dabei die Temperatur im ersten Wärmetauscher an, so muss ggf. weniger gekühlt werden, sodass der regelbare dritte Wärmetauscher dem gasförmigen Arbeitsmedium weniger thermische Energie entziehen muss.

[A 06] Wird als gasförmiges Arbeitsmedium Luft, Helium, Neon, Argon, Stickstoff, Sauerstoff, Kohldioxid oder eine beliebige Mischung der vorgenannten Gase verwendet, so kann ein besonders kostengünstiges und in ausreichender Menge vorhandenes und erwerbbares Gas/Gasgemisch als gasförmiges Arbeitsmedium verwendet werden. Dabei sind vorteilhaft, aufgrund der Umweltverträglichkeit dieser Gase, auch keine erhöhten Anforderungen an die Gasdichtigkeit der Wärmekraftmaschine zu stellen, sodass auch hinsichtlich der Gasdichtigkeit der Wärmekraftmaschine dieselbe konstruktiv einfacher ausgebildet werden kann. Insbesondere im Falle von Luft, muss die Wärmekraftmaschine nicht einmal vorher mit dem dementsprechenden gasförmigen Arbeitsmedium betankt werden, sondern kann direkt vor Ort beim Errichten der Anlage mit dem gasförmigen Arbeitsmedium bestückt werden.

[A 07] Wird in dem Kreislauf ein konstanter Überdruck von 3 - 20 bar eingestellt, so kann aufgrund des Überdrucks eine Massenstromerhöhung erreicht werden, die die Leistungsdichte an der Turbine verbessert. Zudem kann für diesen Fall auch eine Druckregulierung vorgesehen sein, die diese Konstanz des Überdrucks sicherstellt, wobei etwaig auftauchende Druckschwankungen durch bspw. ein Überdruckgefäß abgefangen werden können. Dabei ist es auch denkbar, dass ein konstanter Überdruck von 3 - 15 bar, von bspw. 4-10 bar, ggf. von 4 - 8 bar und insbesondere von 5 - 7 bar eingestellt wird. Bevorzugt ist ein Überdruck von 6 bar.

Weiterhin kann zwischen einem warmen Bereich des Kreislaufs unmittelbar vor der Turbine und einem kalten Bereich des Kreislaufs unmittelbar nach dem letzten als Kühler ausgebildeten Wärmetauscher ein Temperaturgefälle von maximal 50 °C auftreten. Vorteilhaft kann durch ein derartig geringes Temperaturgefälle thermische in mechanische bzw. elektrisch nutzbare Energie umgewandelt werden, in dem andere Wärmekraftmaschinen nicht mehr eingesetzt werden können. Demzufolge ist die Anwendbarkeit der Wärmekraftmaschine vor allem bei geringen Temperaturgefällen deutlich erhöht bzw. erweitert. Dabei ist es denkbar, dass das Temperaturgefälle maximal 40 °C, insbesondere maximal 30 °C und ggf. maximal 25 °C beträgt.

Ist zudem die Wärmekraftmaschine für den Tieftemperaturbereich ausgebildet, so kann dieselbe bei tiefen Temperaturen, wie bspw. maximal 45 °C, insbesondere maximal 40 °C oder ggf. maximal 35 °C eingesetzt werden und thermische Energie in mechanisch bzw. elektrisch nutzbare Energie umgewandelt werden.

[A 08] In einem weiteren Aspekt der Erfindung wird eine Kaskade aus zumindest zwei Wärmekraftmaschinen, wie zuvor beschrieben, vorgeschlagen, bei denen die abgeführte thermische Energie des/r als Kühler ausgebildeten Wärmetauscher einer in Kaskadenrichtung vorhergehenden Wärmekraftmaschine zumindest teilweise dem als Erhitzer ausgebildeten Wärmetauscher einer in Kaskadenrichtung nachfolgenden Wärmekraftmaschine zugeführt wird. Vorteilhaft kann mittels einer derartigen Kaskade auch ein großer Temperaturbereich bzw. ein großes Temperaturgefälle durch zumindest teilweise Umwandlung der thermischen Energie in mechanische bzw. elektrische nutzbare Energie genutzt werden. Dabei kann das in der jeweiligen Wärmekraftmaschine eingesetzte gasförmige Arbeitsmedium an den jeweiligen Temperaturbereich angepasst werden, sowie auch die Dimensionierungen der Wärmetauscher und der jeweiligen Turbine. Dabei ist unter der Kaskadenrichtung diejenige Richtung zu verstehen, in der die Wärmeenergie zwischen den einzelnen Wärmekraftmaschinen an die jeweils nachfolgende übergeben wird.

[A 09] Der Wirkungsgrad der Wärmekraftmaschine kann auch mit Vorteil weiter angehoben werden, wenn eine Wärmerückgewinnung zwischen einem Turbinenvorlauf und einem Turbinenrücklauf des Arbeitsmediums vorgesehen ist.

In einem weiteren Aspekt der Erfindung wird die Verwendung einer Wärmekraftmaschine, wie zuvor beschrieben, mit zumindest einer der folgenden Wärmequellen vorgeschlagen:
[A 10] Wird bspw. als Wärmequelle das Fluid eines Fernheizungssystems verwendet, so kann bspw. der Abgasstrom des Femheizkraftwerks als Wärmequelle verwendet werden und selbst die Abgaswärme zumindest teilweise in mechanisch bzw. elektrisch nutzbare Energie umgesetzt werden. Es ist aber auch denkbar, dass das Heizfluid des Fernheizungssystems als Wärmequelle verwendet wird, bspw. direkt vor Ort in dem Femwärmekraftwerk oder an einer beliebigen Stelle in der Fernwärmeleitung oder vor Ort beim Endabnehmer der Fernwärme. So kann bspw. an einem beliebigen Ort der Fernwärmeleitung elektrische Energie aus der Wärme der Fernwärmeleitung erzeugt werden, sodass separate Stromleitungen an dieser Stelle nicht notwendig sind. Dies ist auch für den Einsatz beim Endabnehmer denkbar, sodass bei dem Endabnehmer aus der Fernwärme elektrisch nutzbare Energie erzeugt wird, die alternativ oder zusätzlich dem Hausstromnetz zugeführt werden kann. Eine derartige Anwendung ist ebenfalls bei einem Fluid eines Hausheizungssystems, bspw. dem Abgasstrom einer Hausfeuerungsanlage oder dem Heizungsfluid der Zentralheizung, denkbar sowie bei den Fluiden von Solarheizungssystemen. Grundsätzlich ist jede Art der Abwärme nutzbar.

Des Weiteren können ebenso Fluide, wie bspw. ein Abgasstrom, eines Verbrennungsmotors oder einer Brennstoffzelle zur weiteren Ausnutzung bspw. der Abwärme herangezogen werden, um die Energieeffizienz der Systeme zu verbessern. Auch chemische Reaktoren sind bspw. als Wärmequellen verwendbar, ebenso wie Fluide in der Stahlindustrie, wie bspw. der zu reinigende Abgasstrom in einem Stahlwerk, der zudem eine hohe Temperatur besitzt. Als Wärmequelle kann auch gespeicherte Wärme dienen, z.B. durch Warmwassertanks, wie bei Sonnenkollektoren oder unter Verwendung von Parafinen, Salzen etc., als Wärmespeichermedium.

[A 11] Vorteilhaft ist, wenn der Wärmetauscher der Wärmekraftmaschine als ein spiralförmiges Rohrsystem ausgebildet ist, das in seinem Zentrum ein Verbindungsrohr aufweist, das eine ausgehende Spirale mit einer eingehenden Spirale verbindet. Dadurch ist der Wärmetauscher sehr kompakt aufgebaut, wodurch er in einer Wärmekraftmaschine nur sehr wenig Platz einnimmt.

[A 12] Das Rohrsystem des Wärmetauschers ist vorzugsweise als ein Doppelrohr bestehend aus einem Innenrohr sowie einem Außenrohr aufgebaut, wobei durch das Innenrohr das gasförmige Arbeitsmedium und durch das Außenrohr ein flüssiges Medium strömt und wobei das Innenrohr im Bereich eines Endes des Rohrsystems, wo sich ein Auslass für das gasförmige Arbeitsmedium sowie ein Auslass für das flüssige Medium befindet, einen Gasverdränger aufweist. Der Gasverdränger ist derart in dem Innenrohr angeordnet ist, dass das Innenrohr in Richtung des Endes des Rohrsystems künstlich verjüngt ist, so dass in dem Innenrohr ein konstanter Massenstrom herrscht. Dadurch erfolgen die Wärmeabfuhr sowie die Wärmezufuhr isobar.

Es zeigen, jeweils schematisch:
- Fig. 1: eine schematische Darstellung einer Wärmekraftmaschine,
- Fig. 2: eine Kaskade aus mehreren Wärmekraftmaschinen,
- Fig. 3: eine Wärmekraftmaschine mit Wärmerückgewinnung,
- Fig. 4: einen Wärmetauscher der Wärmekraftmaschine gemäß der Figur 1,
- Fig. 5: einen Schnitt A-A durch den Wärmetauscher nach Figur 4 und
- Fig. 6: einen Ausschnitt des Wärmetauschers gemäß Figur 4 nach Schnitt B-B.

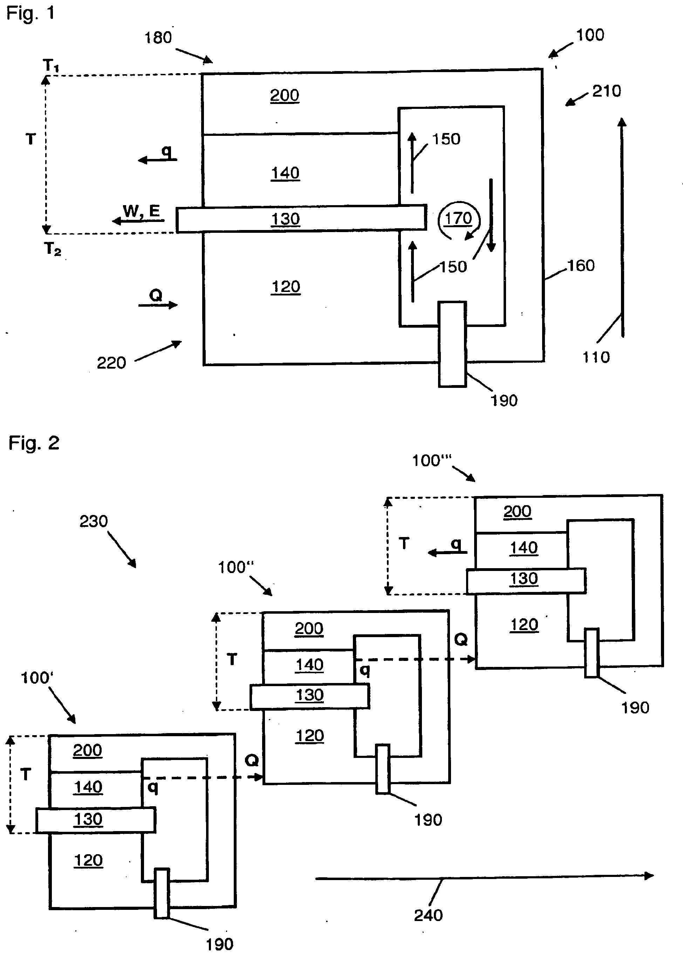

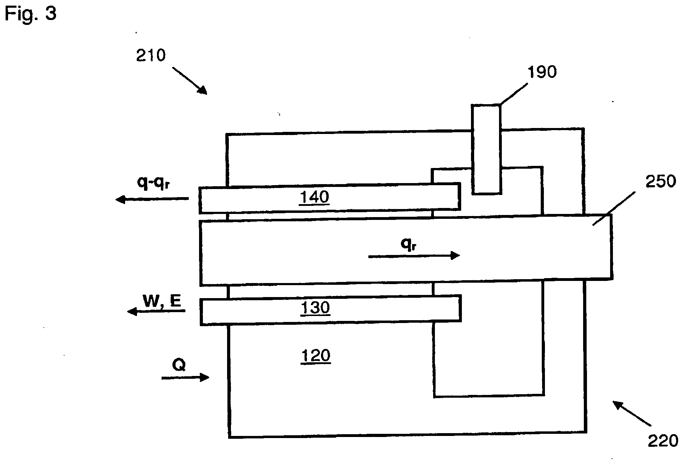

Eine Wärmekraftmaschine 100, wie in Fig. 1 gezeigt, weist vorzugsweise in vertikaler Richtung 110 abfolgend einen ersten als Erhitzer ausgebildeten ersten Wärmetauscher 120, eine Turbine 130 und einen als Kühler ausgebildeten zweiten Wärmetauscher 140 auf. Diese Anordnung des ersten Wärmetauschers 120, der Turbine 130 und des zweiten Wärmetauschers 140 wird in der gewünschten Strömungsrichtung 150 von dem gasförmigen Arbeitsmedium durchströmt. Fluidisch leitend mit dem ersten Wärmetauscher 120, der Turbine 130 und dem zweiten Wärmetauscher 140 ist ein Leitungssystem 160, wobei das Leitungssystem 160, zusammen mit dem ersten Wärmetauscher 120, der Turbine 130 und dem zweiten Wärmetauscher 140 als Kreislauf 170 ausgebildet ist. In Fig. 1 ist eine Einbaulage 180 der Wärmekraftmaschine 100 dargestellt, in der die Wärmekraftmaschine 100 üblicherweise betrieben wird. Dabei ist die vertikale Richtung 110 im Wesentlichen parallel zur Gravitationsrichtung angeordnet und entgegen der Gravitationswirkung orientiert, sodass der Einlauf des Leitungssystems 160 in den ersten Wärmetauscher 120 der tiefste Punkt und der Auslauf aus dem zweiten Wärmetauscher der höchste Punkt der Wärmekraftmaschine 100 darstellt.
Der erste Wärmetauscher 120, die Turbine 130 und der zweite Wärmetauscher 140 können, wie in Fig. 1 dargestellt, eine integrale Baueinheit ausbilden, sodass vorteilhaft das Handling der Wärmekraftmaschine bei dem Errichten der Anlage, sowie bei der Wartung oder dem Umsetzen der Anlage erleichtert ist.
Des Weiteren kann die Wärmekraftmaschine 100 mit einem im Leitungssystem 160 angeordneten Gebläse 190 ausgestattet sein, dass die Luft in der gewünschten Strömungsrichtung 150 transportiert. Dieses Gebläse 190 kann zur Unterstützung der Strömung des gasförmigen Arbeitsmediums in der gewünschten Strömungsrichtung oder zum Anfahren der Wärmekraftmaschine verwendet werden. Zumindest ein Teil, der mittels dem Gebläse 190 dem gasförmigen Arbeitsmedium zugeführten Energie, kann mittels der Turbine 130 rückgewonnen werden.
Die Wärmekraftmaschine 100 kann mit einem dritten Wärmetauscher 200 ausgestattet sein, der vorzugsweise in vertikaler Richtung 110 dem zweiten Wärmetauscher 140 nachfolgend in dem Kreislauf 170 angeordnet ist. Dieser dritte Wärmetauscher kann regelbar ausgebildet sein, sodass am Auslass des dritten Wärmetauschers eine gewünschte Temperatur T₁ eines kalten Bereiches 210 der Wärmekraftmaschine eingestellt werden kann. Dabei weist ein warmer Bereich 220 kurz vor Eingang in die Turbine 130 eine Temperatur D₂ auf, sodass die Temperatur T₂ des warmen Bereiches 220 und die Temperatur T₁ des kalten Bereiches 210 ein definiertes Temperaturgefälle ΔT aufweisen.
Derartige Wärmekraftmaschinen 100 können, wie in Fig. 2 gezeigt, eine Kaskade 230 aufbauen, wobei in Kaskadenrichtung 240 die dem zweiten Wärmetauscher 140 abgeführte Wärme q eines vorhergehenden Wärmetauschers 100', 100" als zugeführte Wärme Q dem ersten Wärmetauscher 120 einer in Kaskadenrichtung 240 nachfolgenden Wärmekraftmaschine 100", 100'" zugeführt wird. Somit kann mittels einer derartigen Kaskade von Wärmekraftmaschinen 100', 100", 100"' ein größeres Temperaturgefälle genutzt werden, da die Temperaturgefälle ΔT der einzelnen Wärmekraftmaschinen zu einem Gesamttemperaturgefälle ΔT_{G} summiert werden können.
Eine Variante der erfindungsgemäßen Wärmekraftmaschine mit einem Gegenstromwärmetauscher 250 ist in Figur 3 dargestellt. Vor dem zweiten Wärmetauscher 140 wird zur Wärmerückgewinnung in Gegenstromwärmetauscher 250 Wärme qᵣ zur Vorerwärmung des Arbeitsmediums genutzt, so dass der Wirkungsgrad der gesamten Maschine steigt. Die Maschine entwickelt also weniger Abwärme. Das in Gegenstromwärmetauscher 250 bereits vorgekühlte Arbeitsmedium wird in Wärmetauscher 140 weiter auf den Anfangszustand heruntergekühlt. Das vorgewärmte Arbeitsmedium wird in Wärmetauscher 120 für den Eintritt in Turbine 130 wieder aufgeheizt, nachdem es den Diffusor bzw. das Gebläse 190 passiert hat wieder aufgeheizt.

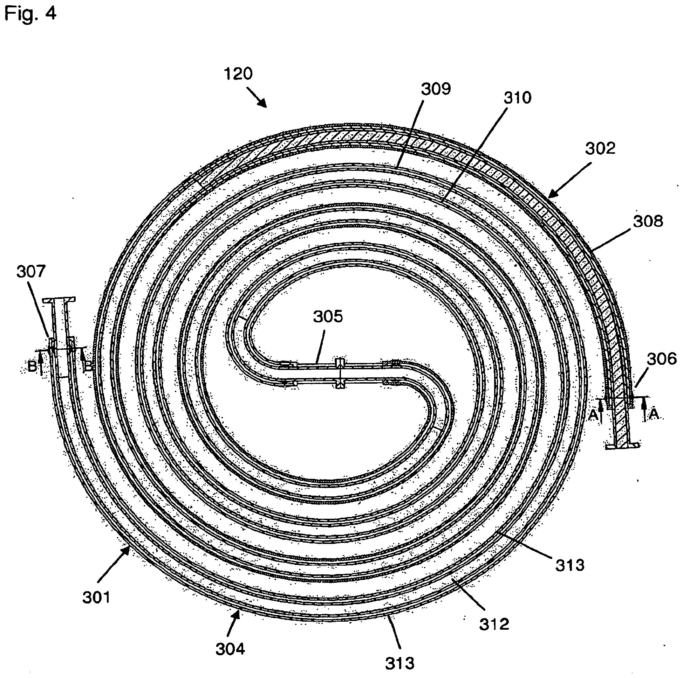

Figur 4 zeigt den Wärmetauscher 120 nach Figur 1, wobei das Innenleben des Wärmetauschers 120 zu sehen ist. Der Wärmetauscher 120 ist als ein spiralförmiges Rohrsystem 304, das als Doppelspirale ausgebildet ist, wobei das Rohrsystem 304 in seinem Zentrum ein Verbindungsrohr 305 besitzt, das eine eingehende Spirale 301 mit einer ausgehenden Spirale 302 verbindet. Durch den spiralförmigen Aufbau des Rohrsystems 304 sind mehrere nebeneinander liegende Rohrabschnitte 308 bis 310, d.h. Rohrwindungen, zu erkennen. Das Rohrsystem 304 ist dabei als Doppelrohr ausgebildet, das ein Innenrohr 312 umfasst, welches von einem Außenrohr 313 umgeben ist. Dabei strömt durch das Innenrohr 312 das gasförmige Arbeitsmedium und durch das Außenrohr 313 ein flüssiges Medium, vorzugsweise Wasser. Als gasförmiges Arbeitsmedium wird Luft, Helium, Neon, Argon, Stickstoff, Sauerstoff, Kohlendioxid oder eine beliebige Mischung der vorgenannten Gase verwendet, wobei in dem Innenrohr 312 ein konstanter Überdruck von 3-20 bar eingestellt ist. Damit handelt es sich um einen isobaren Wärmetauscher 120. Da auch die anderen Wärmetauscher der Wärmekraftmaschine 1 (vergleiche Figur 1) isobare Wärmetauscher sind, verläuft somit sowohl die Energiezufuhr als auch die Energiezufuhr isobar. Dabei erfolgt die Energiezufuhr durch Zufuhr von Wärme und die Energieabfuhr über Wärmeabfuhr sowie über eine Gleichdruckturbine, d.h. mechanische Arbeit.

Das Rohrsystem 304 weist an der ausgehenden Spirale 302 ein erstes Ende 306 und an der eingehenden Spirale 301 ein zweites Ende 307 auf, wobei an dem ersten Ende 306 ein Einlass (nicht dargestellt) für das flüssige Medium und an dem zweiten Ende 307 ein Ablauf (nicht dargestellt) für das flüssige Medium vorgesehen ist. Das Rohrsystem 304 ist mit einem nicht dargestellten Gebläse verbunden, mit dem das gasförmige Arbeitsmedium durch das Innenrohr 312 des Rohrsystems 304 bewegt wird. Dieses Gebläse sorgt dafür, dass das gasförmige Arbeitsmedium in eine vorbestimmte Richtung bewegt wird, und somit die Bewegung des gasförmigen Arbeitsmediums unabhängig von Konvektion ist. Anstelle eines Gebläses kann auch ein Diffusor eingesetzt werden.

Am ersten Ende 306 befindet sich ein Einlass für das gasförmige Arbeitsmedium (nicht gezeigt) und an dem zweiten Ende 307 der Auslass für das gasförmige Arbeitsmedium (nicht gezeigt), womit es sich bei dem Rohrabschnitt 308 um die letzte Rohrwindung handelt.

Es versteht sich, dass auch die anderen beiden Wärmetauscher 140 und 200 der Wärmekraftmaschine 100 nach Figur 1 ebenfalls als ein spiralförmiges Rohrsystem aufgebaut sein können.
Auch ist für einen Fachmann klar, dass das Rohrsystem 304 nicht als Doppelrohr ausgebildet sein muss.

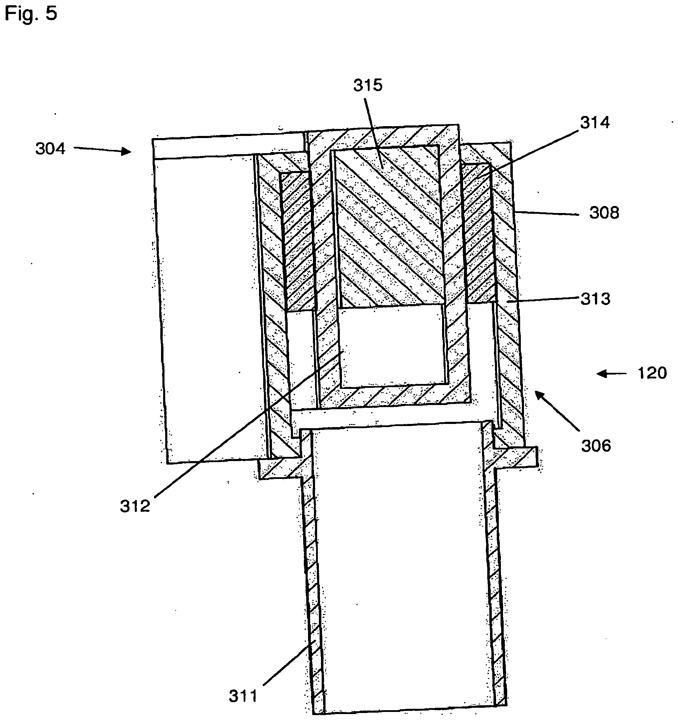

Figur 5 zeigt einen Ausschnitt des Wärmetauschers 120 gemäß Figur 4 nach Schnitt A-A. Der Rohrabschnitt 308 besteht aus dem Innenrohr 312, das von dem Außenrohr 313 umgeben ist. Am Rohrabschnitt 308 ist eine Heizmittelauslass 311 angebracht. Über diesen Heizmittelauslass 311 wird ein flüssiges Heizmedium, vorzugsweise Wasser, aus dem Außenrohr 313 geführt. Dieses Heizmedium heizt das gasförmige Arbeitsmedium, während dieses durch das Rohrsystem 304 strömt, auf. In dem Außenrohr 313 ist ein Heizmittelverdränger 314 vorgesehen. Durch den Heizmittelverdränger 314 wird gewährleistet, dass das Heizmedium und das gasförmige Arbeitsmedium die gleich große Wärmeaustauschflächen aufweisen. Durch das Innenrohr 312 strömt das gasförmige Arbeitsmedium, das in dem Wärmeaustauscher 120 aufgeheizt wurde. In dem Innenrohr 312 ist ein Gasverdränger 315 vorgesehen, durch den der Rohrquerschnitt des Innenrohrs 312 künstlich verjüngt ist. Dieser Gasverdränger 315 gewährleistet, dass bei kostantem Massenstrom die Strömungsgeschwindigkeit des gasförmigen Arbeitsmediums in dem Rohrsystem 304 zunimmt.

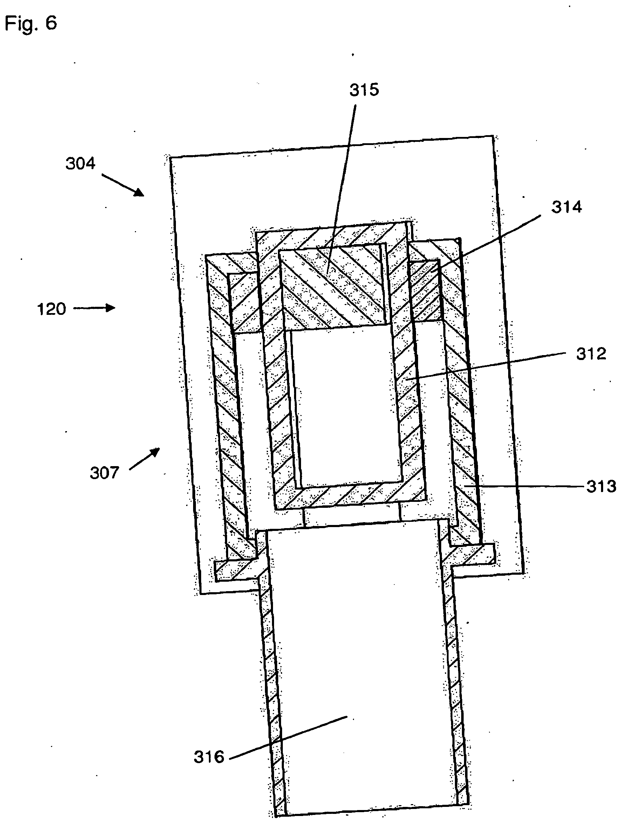

Figur 6 zeigt einen Ausschnitt des Wärmetauschers 120 gemäß Figur 4 nach Schnitt B-B. Zu erkennen ist das Innenrohr 312 mit dem Gasverdränger 315, wobei das Innenrohr 312 von dem Außenrohr 313 umgeben ist. An dem Außenrohr 313, durch das das Heizmedium strömt, ist eine Heizmittelzuleitung 316 vorgesehen, durch das das Heizmedium in das Außenrohr 313 des Rohrsystems 304 gelangt. In dem Außenrohr 313 ist auch der Heizmittelverdränger 314 zu sehen. Das Heizmedium strömt in Richtung des Endes 306 und heizt dabei das gasförmige Arbeitsmedium auf, das in dem Innenrohr 312 entgegengesetzt zu dem Heizmedium strömt.

Wie in den Figuren 5 und 6 zu erkennen, nimmt der Gasverdränger 315, je näher sich das Rohrsystem 304 am Ende 306 befindet, einen immer größer werdenden Bereich im Innenrohr 312 ein. Dies liegt daran, dass das gasförmige Arbeitsmedium in dem Ende 306 des Rohrsystems 304 eine höhere Temperatur und damit eine geringere Dichte sowie eine höhere Strömungsgeschwindigkeit als im Bereich des Endes 307 hat, da dort das aufzuheizende gasförmige Arbeitsmedium in das Rohrsystem 304 geleitet wird. Durch den Gasverdränger 315 wird somit gewährleistet, dass der Massenstrom des gasförmigen Arbeitsmediums in dem Rohrsystem 304 konstant bleibt.

### Bezugszeichenliste

- 100,100',100",100'": Wärmekraftmaschine
- 110: vertikale Richtung
- 120: erster Wärmetauscher
- 130: Turbine
- 140: zweiter Wärmetauscher
- 150: Strömungsrichtung
- 160: Leitungssystem
- 170: Kreislauf
- 180: Einbaulage
- 190: Gebläse, Diffusor
- 200: dritter Wärmetauscher
- 210: kalter Bereich
- 220: warmer Bereich
- 230: Kaskade
- 240: Kaskadenrichtung
- 250: Gegenstromwärmetauscher für Wärmerückgewinnung (Luftvorwärmer)
- 301: ausgehende Spirale
- 302: eingehende Spirale
- 306: Ende
- 307: Ende
- 308: Rohrabschnitt
- 309: Rohrabschnitt
- 310: Rohrabschnitt
- 311: Heizmittelauslass
- 312: Innenrohr
- 313: Außenrohr
- 314: Heizmittelverdränger
- 315: Gasverdränger
- 316: Heizmittelzuleitung
- T₁: Temperatur des kalten Bereiches
- T₂: Temperatur des warmen Bereiches
- ΔT: Temperaturgefälle
- ΔT_{G}: Gesamttemperaturgefälle
- Q: zugeführte Wärme
- q: abgeführte Wärme
- qr: rückgewonnene Wärme
- E, W: gewonnene, nutzbare elektrische Energie bzw. mechanische Arbeit

## Patentansprüche

1. Wärmekraftmaschine mit einem als Erhitzer ausgebildeten ersten Wärmetauscher (120), mit einem als Kühler ausgebildeten zweiten Wärmetauscher (140), mit einer zwischen dem ersten und dem zweiten Wärmetauscher angeordneten Turbine (130) und einem, ein gasförmiges Arbeitsmedium aufweisenden und als Kreislauf (170) ausgebildeten, Leitungssystem (160), das die Komponenten (120,130,140,190,200) fluidisch leitend miteinander verbindet,
**dadurch gekennzeichnet,**
**dass** das Arbeitsmedium gasförmig ist und dass in Einbaulage (180) abfolgend der erste Wärmetauscher (120), die Turbine (130) und der zweite Wärmetauscher (140) angeordnet sind, wobei die Wärmetauscher (120,140, 200) isobare Wärmeaustauscher sind, so dass die Energiezufuhr sowie die Energieabfuhr isobar verläuft.

2. Wärmekraftmaschine nach Anspruch 1,
wobei die Wärmetauscher (120,140, 200) mit der Turbine (130) als eine integrale Baueinheit ausgebildet sind und/oder wobei die Turbine (130) einen Generator aufweist, mit dem sie als integrale Baueinheit ausgebildet ist.

3. Wärmekraftmaschine nach einem der vorhergehenden Ansprüche,
wobei die Turbine (130) als Radialturbine ausgebildet ist und ggf. eine Drehzahlanpassung aufweist.

4. Wärmekraftmaschine nach einem der vorhergehenden Ansprüche,
wobei in dem Leitungssystem (160) zwischen dem zweiten Wärmetauscher (140) und dem ersten Wärmetauscher (120) ein Gebläse (190) oder Diffusor (190) angeordnet ist.

5. Wärmekraftmaschine nach einem der vorhergehenden Ansprüche,
wobei ein, insbesondere als Kühler ausgebildeter, dritter vorzugsweise regelbarer Wärmetauscher (200) in dem Leitungssystem (160) vorgesehen ist, der bei vertikalem Einbau in Einbaulage (180) vertikal abfolgend nach dem zweiten Wärmetauscher (140) angeordnet ist.

6. Wärmekraftmaschine nach einem der vorhergehenden Ansprüche,
wobei als gasförmiges Arbeitsmedium Luft, Helium, Neon, Argon, Stickstoff, Sauerstoff, Kohlendioxid oder eine beliebige Mischung der vorgenannten Gase verwendet wird und/oder Wärmekraftmaschine nach einem der vorhergehenden Ansprüche, wobei in dem Kreislauf (170) ein konstanter Überdruck von 3-20 bar eingestellt ist.

7. Wärmekraftmaschine nach einem der vorhergehenden Ansprüche,
wobei zwischen einem warmen Bereich (220, T₂) des Kreislaufs (170) bei vertikalem Einbau vorzugsweise in vertikaler Richtung (110) unmittelbar vor der Turbine (130) und einem kalten Bereich (210, T₁) des Kreislaufs (170) vorzugsweise in vertikaler Richtung (110) unmittelbar nach dem letzten als Kühler ausgebildeten Wärmetauscher (140, 200) ein Temperaturgefälle (ΔT) von maximal 70°C auftritt.

8. Kaskade aus zumindest zwei Wärmekraftmaschinen (100',100". 100'") nach einem der Ansprüche 1 bis 7, wobei die abgeführte thermische Energie (q) des/r als Kühler ausgebildeten zweiten Wärmetauscher (140,200) einer in Kaskadenrichtung (240) vorhergehenden Wärmekraftmaschine (100',100") zumindest teilweise dem als Erhitzer ausgebildeten ersten Wärmetauscher (120) einer in Kaskadenrichtung (240) nachfolgenden Wärmekraftmaschine (100", 100'") zugeführt wird.

9. Wärmekraftmaschine nach einem der vorherigen Ansprüche, wobei eine Wärmerückgewinnung (250) zwischen einem Turbinenvorlauf und einem Turbinenrücklauf des Arbeitsmediums vorgesehen ist.

10. Verwendung einer Wärmekraftmaschine nach einer der Ansprüche 1 bis 9 mit zumindest einer der folgenden Wärmequellen:
einem Fluid eines Femheizungssystems,
einem Fluid eines Hausheizungssystem,
einem Fluid eines Solarheizungssystems,
einem Fluid eines Verbrennungsmotors,
einem Fluid einer Brennstoffzelle,
einer Wärmequelle eines chemischen Reaktors,
einem Fluid in der Stahlindustrie,
einem Fluid eines Wärmespeichers.

11. Wärmekraftmaschine nach einem der Ansprüche 1 bis 9, wobei der Wärmetauscher (120,140,200) als ein spiralförmiges Rohrsystem (304) ausgebildet ist, das in seinem Zentrum ein Verbindungsrohr (305) aufweist, das eine ausgehende Spirale (302) mit einer eingehenden Spirale (301) verbindet.

12. Wärmekraftmaschine nach Anspruch 11, **dadurch gekennzeichnet, dass** das Rohrsystem (304) als ein Doppelrohr mit einem Innenrohr (312) sowie einem Außenrohr (313) ausgebildet ist, wobei durch das Innenrohr (312) das gasförmige Arbeitsmedium und durch das Außenrohr (313) ein flüssiges Medium strömt und wobei im Innenrohr (312) ein Gasverdränger (315) vorgesehen ist, der den Rohrquerschnitt des Innenrohrs (312) künstlich verjüngt.

## Claims

1. Heat engine with a first heat exchanger (120), implemented as a heating means, with a second heat exchanger (140), implemented as a cooling means, with a turbine (130), disposed between the first and the second heat exchanger, and a duct system (160) implemented to comprise a gaseous working medium and to form a circulatory system (170), which duct system connects the components (120, 130, 140, 190, 200) with one another such that they are fluidically conductive, **characterized in that**
the working medium is gaseous and that in the installation position (180) the first heat exchanger (120), the turbine (130) and the second heat exchanger (140) follow sequentially, wherein the heat exchangers (120, 140, 200) are isobaric heat exchangers such that the energy supply as well as the energy removal take place isobarically.

2. Heat engine as in claim 1,
wherein the heat exchangers (120, 140, 200) are implemented as an integral structural unit with the turbine (130) and/or wherein the turbine (130) comprises a generator with which it is implemented as an integral structural unit.

3. Heat engine as in one of the preceding claims, wherein the turbine (130) is implemented as a radial flow turbine and optionally comprises a speed adaptation means.

4. Heat engine as in one of the preceding claims, wherein in the duct system (160) between the second heat exchanger (140) and the first heat exchanger (120) a blower (190) or diffuser (190) is disposed.

5. Heat engine as in one of the preceding claims, wherein a third, preferably regulatable, heat exchanger (200), implemented in particular as a cooling means, is provided in the duct system (160), which heat exchanger, after vertical installation, is disposed in its installation position (180) such that it vertically succeeds the second heat exchanger (140).

6. Heat engine as in one of the preceding claims, wherein as the gaseous working medium air, helium, neon, argon, nitrogen, oxygen, carbon dioxide or any mixture of said gases is utilized and/or heat engine as in one of the preceding claims, wherein a constant positive pressure of 3-20 bar is set in the circulatory system (170).

7. Heat engine as in one of the preceding claims, wherein between a warm region (220, T2) of the circulatory system (170), with vertical installation directly in front of the turbine (130) in the vertical direction, and a cold region (210, T1) of the circulatory system (170), preferably in the vertical direction (110) directly following the last heat exchanger (140, 200), implemented as a cooling means, a temperature gradient (ΔT) of maximally 70°C obtains.

8. Cascade of at least two heat engines (100', 100", 100"') as in one of claims 1 to 7, wherein the dissipated thermal energy (q) of the second heat exchanger(s) (140, 200), implemented as cooling means, of a heat engine (100', 100") preceding in the cascade direction (240) is at least partially supplied to the first heat exchanger (120), implemented as a heating means, of a heat engine (100", 1 Ofl"') succeeding in the cascade direction (240).

9. Heat engine as in one of the preceding claims, wherein a heat recovery means (250) is provided between a turbine flow and a turbine backflow of the working medium.

10. Use of the heat engine as in one of claims 1 to 9, with at least one of the following heat sources:
a fluid of a district heating system,
a fluid of a building heating system,
a fluid of a solar heating system,
a fluid of a combustion engine,
a fluid of a fuel cell,
a heat source of a chemical reactor,
a fluid in the steel industry,
a fluid of a heat store.

11. Heat engine as in one of claims 1 to 9, wherein the heat exchanger (120, 140, 200) is implemented as a helical pipe system (304) comprising in its center a connection pipe (305) that connects an outgoing helix (302) with an incoming helix (301).

12. Heat engine as in claim 11, **characterized in that** the pipe system (304) is implemented as a double pipe with an inner pipe (312) as well as an outer pipe (313), wherein through the inner pipe (312) flows the gaseous working medium and through the outer pipe (313) a liquid medium and wherein in the inner pipe (312) a gas displacer (315) is provided that artificially reduces the pipe cross section of the inner pipe (312).

## Revendications

1. Moteur thermique comprenant un premier échangeur de chaleur (120) réalisé en tant que dispositif de chauffage, un deuxième échangeur de chaleur (140) réalisé en tant que refroidisseur, une turbine (130) disposée entre le premier et le deuxième échangeur de chaleur et un système de conduites (160) présentant un fluide de travail gazeux et réalisé sous forme de circuit (170), qui relie les composants (120, 130, 140, 190, 200) de manière fluidique les uns aux autres,
**caractérisé en ce que**
le fluide de travail est gazeux et **en ce que** le premier échangeur de chaleur (120), la turbine (130) et le deuxième échangeur de chaleur (140) sont disposés en succession dans la position d'installation (180), les échangeurs de chaleur (120, 140, 200) étant des échangeurs de chaleur isobares de telle sorte que l'apport en énergie ainsi que l'évacuation d'énergie s'effectuent de manière isobare.

2. Moteur thermique selon la revendication 1,
dans lequel les échangeurs de chaleur (120, 140, 200) avec la turbine (130) sont réalisés sous forme d'unité structurelle intégrale et/ou dans lequel la turbine (130) présente un générateur avec lequel elle est réalisée sous forme d'unité structurelle intégrale.

3. Moteur thermique selon l'une quelconque des revendications précédentes,
dans lequel la turbine (130) est réalisée sous forme de turbine radiale et présente éventuellement une adaptation de régime.
Système de bus de terrain selon la revendication 3 dans lequel un ou plusieurs des troncs (T1, T2, Tn) sont dotés d'un conditionneur de puissance et/ou d'une terminaison commun en aval du moyen d'isolement (7) et du moyen de connexion (9).

4. Moteur thermique selon l'une quelconque des revendications précédentes,
dans lequel une soufflante (190) ou un diffuseur (190) est disposé(e) dans le système de conduites (160) entre le deuxième échangeur de chaleur (140) et le premier échangeur de chaleur (120).

5. Moteur thermique selon l'une quelconque des revendications précédentes,
dans lequel un troisième échangeur de chaleur (200), de préférence réglable, notamment réalisé sous forme de refroidisseur, est prévu dans le système de conduites (160), lequel est disposé, lors de l'installation verticale, dans la position d'installation (180) verticalement à la suite du deuxième échangeur de chaleur (140).

6. Moteur thermique selon l'une quelconque des revendications précédentes,
dans lequel de l'air, de l'hélium, du néon, de l'argon, de l'azote, de l'oxygène, du dioxyde de carbone ou un mélange quelconque desdits gaz est utilisé en tant que fluide de travail gazeux et/ou moteur thermique selon l'une quelconque des revendications précédentes, dans lequel une surpression constante de 3-20 bar est ajustée dans le circuit (170).

7. Moteur thermique selon l'une quelconque des revendications précédentes,
dans lequel un gradient de température (ΔT) de 70°C maximum se produit entre une plage chaude (220, T2) du circuit (170) pour une installation verticale de préférence dans la direction verticale (110) directement avant la turbine (130) et une plage froide (210, T1) du circuit (170) de préférence dans la direction verticale (110) directement après le dernier échangeur de chaleur (140, 200) réalisé en tant que refroidisseur.

8. Cascade constituée d'au moins deux moteurs thermiques (100', 100", 1000"') selon l'une quelconque des revendications 1 à 7, dans laquelle l'énergie thermique évacuée (q) du ou des deuxièmes échangeurs de chaleur (140, 200) réalisés en tant que refroidisseur d'un moteur thermique (100' ; 100") précédent dans la direction de la cascade (240) est acheminée au moins en partie au premier échangeur de chaleur (120) réalisé en tant que dispositif de chauffage d'un moteur thermique (100", 100'") suivant dans la direction de la cascade (240).

9. Moteur thermique selon l'une quelconque des revendications précédentes, dans lequel une récupération de chaleur (250) est prévue entre une section aller de la turbine et une section retour de la turbine du fluide de travail.

10. Utilisation d'un moteur thermique selon l'une quelconque des revendications 1 à 9, comprenant au moins l'une des sources de chaleur suivantes :
un fluide d'un système de chauffage éloigné,
un fluide d'un système de chauffage domestique,
un fluide d'un système de chauffage solaire,
un fluide d'un moteur à combustion interne,
un fluide d'une pile à combustible,
une source de chaleur d'un réacteur chimique,
un fluide dans l'industrie sidérurgique,
un fluide d'un accumulateur de chaleur.

11. Moteur thermique selon l'une quelconque des revendications 1 à 9, dans lequel l'échangeur de chaleur (120, 140, 200) est réalisé sous forme de système de tubes en spirale (304) qui présente en son centre un tube de connexion (305) qui relie une spirale sortante (302) à une spirale rentrante (301).

12. Moteur thermique selon la revendication 11, **caractérisé en ce que** le système de tubes (304) est réalisé sous forme de double tube avec un tube interne (312) et un tube externe (313), le fluide de travail gazeux s'écoulant à travers le tube interne (312) et un milieu fluide s'écoulant à travers le tube externe (313) et un compresseur de gaz (315) étant prévu dans le tube interne (312), lequel rétrécit artificiellement la section transversale de tube du tube interne (312).
